# EUROPÄISCHE PATENTSCHRIFT

(11) **EP 2 298 026 B1**
(45) Veröffentlichungstag und Bekanntmachung des Hinweises auf die Patenterteilung: **02.09.2015**
(21) Anmeldenummer: 09780140.1
(22) Anmeldetag: 03.07.2009
(51) Int. Cl.: H05B 3/14, C04B 35/00

(54) **HEIZUNGSVORRICHTUNG UND VERFAHREN ZUR HERSTELLUNG DER HEIZUNGSVORRICHTUNG**
HEATING APPARATUS AND METHOD FOR PRODUCING THE HEATING APPARATUS
DISPOSITIF DE CHAUFFAGE ET PROCÉDÉ DE FABRICATION DU DISPOSITIF DE CHAUFFAGE

(30) Priorität: 10.07.2008 DE 102008032509
(43) Veröffentlichungstag der Anmeldung: 23.03.2011
(73) Patentinhaber: Epcos AG, 81669 München (DE)
(72) Erfinder: IHLE, Jan, 8071 Grambach (AT); KAHR, Werner, A-8530 Deutschlandsberg (AT); WISCHNAT, Volker, A-8530 Deutschlandsberg (AT)
(74) Vertreter: Epping - Hermann - Fischer
(86) Internationale Anmeldenummer: PCT/EP2009/058421
(87) Internationale Veröffentlichungsnummer: WO 2010/003900

(56) Entgegenhaltungen:
- WO-A-93/05352
- DE-A1- 4 201 944
- US-A- 4 189 700
- US-A- 6 109 247
- US-A1- 2004 028 396

## Beschreibung

Die Erfindung betrifft eine Heizungsvorrichtung und ein Verfahren zur Herstellung der Heizungsvorrichtung.

Medien, beispielsweise Fluide, können mittels eines thermischen Kontakts mit Materialien, die einen positiven Temperaturkoeffizienten des elektrischen Widerstands haben (PTC-Materialien), erhitzt werden. Solche PTC-Materialien können bisher als Scheiben oder Rechteckelemente ausgeformt werden. Steht das Medium nicht in direktem Kontakt zu dem PTC-Material, sondern befindet sich in einem Behälter oder Gehäuse, können reduzierte Kontaktflächen zwischen den PTC-Materialien und den Gehäusen vorhanden sein, wenn die Gehäuse oder Behälter gekrümmte Oberflächen haben. Eine kleine Kontaktfläche zwischen dem PTC-Material und dem Gehäuse hat einen geringen Wirkungsgrad aufgrund des ungünstigen Oberflächen-Volumenverhältnisses zur Folge. Bislang können beispielsweise runde Rohre, die von Fluiden durchströmt werden, nur mit geringem Wirkungsgrad mittels PTC-Materialien beheizt werden. Dies bewirkt längere Aufheizzeiten und höhere Heizleistungen.

DE 4 201 944 offenbart eine Heizungsvorrichtung der Stand der Technik.

Eine zu lösende Aufgabe besteht darin, eine Heizungsvorrichtung bereitzustellen, die einen hohen Wirkungsgrad aufweist. Diese Aufgabe wird durch eine Heizungsvorrichtung gemäß dem Patentanspruch 1 gelöst. Weitere Ausführungsformen der Vorrichtung und ein Verfahren zur Herstellung dieser Vorrichtung sind Gegenstand weiterer Patentansprüche.

Gemäß einer Ausführungsform wird eine Heizungsvorrichtung bereitgestellt, die ein Rohr mit einer Außenfläche, das zur Leitung eines Mediums geeignet ist, und zumindest einen spritzgegossenen Formkörper auf der Außenfläche des Rohrs umfasst. Dabei ist der Formkörper hinsichtlich seiner Form an die Außenfläche des Rohrs angepasst und weist ein Material mit positivem Temperaturkoeffizienten des elektrischen Widerstands auf.

Damit wird eine Heizungsvorrichtung, die beispielsweise als Durchlauferhitzer verwendet werden kann, bereitgestellt, die effizient ein Medium, das durch das Rohr geleitet wird, erhitzt. Durch Anlegen einer Spannung an den Formkörper erwärmt sich dieser aufgrund seines positiven Temperaturkoeffizienten des elektrischen Widerstands, und kann diese Wärme an das Rohr abgeben. Dabei weist der Formkörper ein selbstregulierendes Verhalten auf. Erreicht die Temperatur in dem Formkörper einen kritischen Wert, steigt auch der Widerstand in dem Formkörper, so dass weniger Strom durch den Formkörper fließt. Damit wird ein weiteres Aufheizen des Formkörpers verhindert, womit keine zusätzliche elektronische Regelung der Heizleistung bereitgestellt werden muss. Mit dieser Heizungsvorrichtung kann das durch das Rohr geleitete Medium mittelbar durch den Formkörper erhitzt werden.

Durch die Verwendung eines spritzgegossenen Formkörpers wird es möglich, den Wirkungsgrad der Heizungsvorrichtung im Vergleich zu herkömmlichen Heizungsvorrichtungen zu verbessern, da das Rohr unabhängig von der Form der Außenfläche großflächig mit dem Formkörper in thermischem Kontakt steht und somit ein günstiges Oberflächen Volumenverhältnis vorliegt.

Weiterhin besteht kein direkter Kontakt zwischen dem von dem Rohr geleiteten, zu beheizenden Medium und dem Formkörper. Damit kann vermieden werden, dass der Formkörper durch ein zu beheizendes Medium korrosiv angegriffen oder durch das Medium gelöst wird, und/oder dass das Material des Formkörpers das zu erhitzende Medium kontaminiert.

Das Rohr der Heizungsvorrichtung kann weiterhin eine Außenfläche aufweisen, die zumindest in Teilbereichen eine Krümmung umfasst. Es können also zylindrische Rohre eingesetzt werden, Rohre mit ovalem Durchschnitt oder weitere beliebig geformte Rohre, die symmetrisch oder unsymmetrisch ausgeformt sein können und deren Krümmung auch durch einen Knick unterbrochen sein kann.

Der Einsatz der verschiedenen geometrischen Formen der Rohre wird durch die Verwendung eines spritzgegossenen Formkörpers, der auf der Außenfläche des Rohrs angebracht wird, ermöglicht. Das Rohr kann weiterhin eine beliebige Länge aufweisen, beispielsweise eine Länge von 5 bis 10 cm, an die der spritzgegossene Formkörper angepasst ist. Der Durchmesser eines Rohrs kann, wenn beispielsweise eine zylindrische Form gewählt wird, ebenfalls beliebig gewählt werden, beispielsweise in einer Größe von bis zu 5 mm. Das Rohr kann eine Wanddicke aufweisen, die so gewählt ist, dass die mechanische Festigkeit des Rohrs gewährleistet ist, und die Wärme des Formkörpers gut durch die Wände des Rohres geleitet werden kann. Eine Wanddicke kann beispielsweise weniger als 1 mm oder weniger als 1/2 mm betragen. Das Verhältnis der Länge des Rohrs zu dem Durchmesser des Rohrs kann so gewählt werden, dass die Durchlaufzeit für das Medium durch das Rohr lang genug ist, damit das Medium in der Nähe der Innenseite des Rohrs sowie in der Mitte des Rohrs gleichmäßig erhitzt wird.

Das Rohr kann ein Material aufweisen, das thermisch gut leitfähig ist. Das Material kann ausgewählt sein aus einer Gruppe, die Metalle sowie elektrisch isolierende Materialien umfasst. Elektrisch isolierende Materialien können gleichzeitig gut wärmeleitfähig sein. Als Material für das Rohr kann beispielsweise Aluminiumoxid oder Aluminiumnitrid gewählt werden. Wird anstelle eines Metalls ein elektrisch isolierendes Material für das Rohr gewählt, kann beispielsweise bei Netzspannungsanwendungen eine elektrische Isolation zur Vermeidung eines Potential führenden Mediums erreicht werden. Die Verwendung von Aluminiumoxid als Material für das Rohr führt zu einem gut thermisch leitfähigen Rohr, das inert gegenüber Säure und Basen sowie lebensmittelecht gegenüber Medien, die nicht kontaminiert werden dürfen, ist.

Der zumindest eine Formkörper und das Rohr können in thermischem Kontakt miteinander stehen. Weiterhin kann zwischen dem Rohr und dem zumindest einen Formkörper eine thermisch leitfähige Paste angeordnet sein. In beiden Fällen ist ein guter thermischer Kontakt zwischen dem Rohr und dem Formkörper gewährleistet, so dass der Wärmeübergang zwischen dem Formkörper und dem Rohr optimiert wird. Der Wärmeübergang wird weiterhin durch die angepasste Form des spritzgegossenen Formkörpers an das Rohr verbessert, da ein großflächiger thermischer Kontakt zwischen dem Formkörper und dem Rohr vorhanden ist.

Die Verbindung zwischen dem Rohr und dem Formkörper kann formschlüssig und elastisch sein. Um eine elastische Verbindung zwischen Rohr und Formkörper zu erhalten, wird eine thermisch leitfähige Paste zwischen dem Rohr und dem Formkörper angeordnet. Für die thermisch leitfähige Paste kann ein Material gewählt werden, das in Polymere eingelagerte Partikel umfasst. Die Partikel können beispielsweise thermisch leitfähige Metallpartikel oder Aluminiumoxidpartikel umfassen. Diese Partikel sorgen für eine gute Wärmeleitfähigkeit der zwischen dem Formkörper und dem Rohr angeordneten Paste.

Eine elastische Verbindung zwischen dem Formkörper und dem Rohr gleicht mögliche Volumenänderungen des Rohrs und/oder des Formkörpers aus, die während der Temperaturveränderung bei dem Heizvorgang auftreten kann, sodass mechanische Spannungen zwischen Rohr und Formkörper und/oder Spannungsrisse des Rohrs oder des Formkörpers vermieden werden.

Der zumindest eine Formkörper kann sich weiterhin in Längsrichtung erstrecken. Somit weist der Formkörper eine Längsstreckung auf. Damit kann das Rohr entlang seiner Längsachse vollständig oder zumindest großflächig von dem zumindest einen Formkörper umgeben sein, da dieser an die Längsstreckung des Rohrs angepasst ist. Somit werden große Bereiche des Rohrs von dem Formkörper thermisch kontaktiert und bei Anlegen einer Spannung an den Formkörper erhitzt.

Der Formkörper kann an dem Rohr mittels einer Klemme oder mittels eines Klebers befestigt sein. Bei Verwendung eines Klebers kann eine plastische Klebverbindung gewählt werden, um thermisch induzierte Spannungsrisse, die durch Volumenänderungen der Materialien des Formkörpers, des Rohrs oder des Klebers auftreten könnten, zu vermeiden. Weiterhin können auch Klemmen und Kleber gleichzeitig zur Befestigung des Formkörpers am Rohr verwendet werden.

Der Kleber kann zwischen dem Rohr und dem Formkörper angeordnet werden. Er kann auf dem Rohr oder auf einer Innenseite des Formkörpers angebracht werden.

Der Kleber kann ein Material aufweisen, das aus einer Gruppe ausgewählt ist, die Kleber auf Basis von Epoxiden, Polyamiden und Silikonen umfasst. Diese Materialien können weiterhin Silber- und/oder Nickel- und/oder Aluminiumoxidpulver aufweisen, die die thermische Leitfähigkeit des Klebers verbessern.

Das Rohr kann eine zylindrische Außenfläche aufweisen und der zumindest eine Formkörper kann formschlüssig an die Außenfläche angepasst sein. Eine formschlüssige Anpassung vermindert Luftspalten zwischen Rohr und Formkörper, sodass ein guter thermischer Kontakt zwischen Rohr und Formkörper vorhanden ist.

Weiterhin können entlang der Umfangsrichtung des Rohrs mehrere Formkörper auf dessen Außenfläche angeordnet sein. Somit können beispielsweise halbschalenförmige Formkörper auf gegenüberliegenden Seiten eines zylindrischen Rohrs angeordnet sein. Weiterhin können auch Viertel oder noch kleinere Teilbereiche des Rohrs von jeweils einem Formkörper bedeckt sein und damit mehrere Formkörper aneinandergereiht das Rohr in der Richtung der Umfangsrichtung bedecken. Formkörper können auch hintereinander, in der Längsrichtung des Rohrs auf dem Rohr angeordnet sein, sodass auch längere Rohre durch Formkörper bedeckt sind.

Weiterhin können mehrere Rohre parallel nebeneinander angeordnet werden, und von Formkörpern umgeben sein. Dabei ist eine einstückige Ausformung denkbar, bei der ein einziger Formkörper an die parallel angeordneten Rohre angepasst ist, beziehungsweise bei der mehrere Formkörper so ausgeformt sind, dass sie eine Vielzahl von Rohren umgeben. Beispielsweise können aneinanderhängende Halbschalen als Formkörper ausgeformt werden, in die Rohre gelegt werden und ein passendes Gegenstück an aneinanderhängenden Halbschalen auf der anderen Seite der Rohre angeordnet werden. Alternativ können auch einzelne, von Formkörpern umgebene Rohre, nebeneinander angeordnet werden.

Das Rohr kann zur Leitung von Fluiden geeignet sein. Damit können durch das Rohr geleitete Fluide in dem Rohr beheizt werden. Ein Fluid kann Gase und Flüssigkeiten, beispielsweise Wasser umfassen. Ebenso können Gele oder Pulver durch das Rohr geleitet werden.

Der Formkörper kann elektrische Kontaktierungen zur Erzeugung eines Stromflusses aufweisen. Eine Kontaktierung umfasst dabei eine an dem Formkörper angebrachte Elektrode, sowie ein Kontaktelement, das elektrisch leitend an die Elektrode und an einen externen elektrischen Kontakt angeschlossen werden kann. Zur Bildung zweier Elektroden können beispielsweise die Innen- und Außenfläche des Formkörpers metallisiert sein. Die innen liegende Metallisierung, die eine der Elektroden darstellt, kann durch ein Kontaktelement, beispielsweise ein abgewinkeltes Kontaktblech, mit einem äußeren Kontakt elektrisch kontaktiert werden. Dafür ist in dem Formkörper dann eine Aussparung zur Anordnung des Kontaktbleches vorgesehen. Das Kontaktblech kann auf einer Stirnseite des Rohres oder an einer Stirnseite des Formkörpers aus dem Zwischenraum zwischen dem Rohr und dem Formkörper herausgeführt werden. Die äußere Metallisierung, die die zweite Elektrode darstellt, kann beispielsweise durch eine außen am Rohr befestigte Klemme elektrisch kontaktiert werden.

Werden zwei oder mehrere Formkörper an dem Rohr angeordnet, können die einzelnen Formkörper Stirnseiten aufweisen, die metallisiert werden können. Die einzelnen metallisierten Stirnseiten können dann elektrisch mittels eines Kontaktelements kontaktiert werden. Weiterhin können auch die Stirnseiten eines einzigen Formkörpers, der an ein Rohr angepasst ist, metallisiert sein und mittels Kontaktelementen kontaktiert werden.

Der Formkörper kann eine Wanddicke aufweisen, die aus einem Bereich ausgewählt ist, der 0,1 mm bis 3 mm umfasst. Die Wanddicke des Formkörpers wird in Abhängigkeit der Ausformung der Elektroden und in Abhängigkeit der an die Elektroden angelegten Spannung ausgewählt. Weiterhin kann die Wanddicke des Formkörpers in Abhängigkeit des Abstands der an dem Formkörper angebrachten Elektroden voneinander ausgewählt werden. Somit kann in Abhängigkeit der Anordnung und Ausformung der Elektroden und der Wanddicke des Formkörpers der ohmsche Widerstand im Formkörper eingestellt werden.

Beispielsweise kann der Abstand der Elektroden bei Netzspannungsanwendungen 2 mm betragen. Je nach der Größe des Rohres kann der Abstand der Elektroden auch größer sein.

Werden die Elektroden an Stirnseiten von Formkörpern angebracht und weisen einen Abstand von 2 mm auf, kann die Wanddicke der Formkörper beispielsweise 0,2 mm betragen.

Weiterhin kann die Heizungsvorrichtung ein Kunststoffspritzgehäuse aufweisen, das die Heizungsvorrichtung thermisch isoliert. Das Rohr kann an seinen Enden Bereiche aufweisen, die zum Anschluss an ein Leitungssystem für das zu leitende und zu beheizende Medium geeignet sind. Diese Bereiche können beispielsweise hart gelötete Metallringe umfassen, die an das Leitungssystem angelötet werden, was zu einer dichten Verbindung zwischen der Heizungsvorrichtung und dem Leitungssystem führt.

Der Formkörper der Heizungsvorrichtung kann ein keramisches Material enthalten, das die Struktur Ba_{1-x-y}MₓD_{y}Ti_{1-a-b}NₐMn_{b}O₃ aufweist. Die Struktur umfasst eine Perowskit-Struktur. Dabei umfasst x den Bereich 0 bis 0,5, y den Bereich 0 bis 0,01, a den Bereich 0 bis 0,01, b den Bereich 0 bis 0,01, M umfasst ein zweiwertiges Kation, D einen drei-oder vierwertigen Donor und N ein fünf- oder sechswertiges Kation. M kann beispielsweise Calcium, Strontium oder Blei sein, D kann beispielsweise Yttrium oder Lanthan sein, Beispiele für N sind Niob oder Antimon. Der Formkörper kann metallische Verunreinigungen umfassen, die mit einem Gehalt von weniger als 10 ppm vorhanden sind. Der Gehalt an metallischen Verunreinigungen ist so gering, dass die PTC-Eigenschaften des Formkörpers nicht beeinflusst werden.

Dieses Material kann eine Curietemperatur aufweisen, die einen Bereich von -30° C bis 340° C umfasst. Das Material des Formkörpers kann weiterhin einen Widerstand bei 25° C aufweisen, der in einem Bereich von 3 Ωcm bis 30 Ωcm liegt. Es wird weiterhin ein Verfahren zur Herstellung einer Heizungsvorrichtung mit den oben genannten Eigenschaften bereitgestellt. Das Verfahren umfasst die Verfahrensschritte
A) Bereitstellen eines Rohres mit einer Außenfläche,
B) Spritzgießen des zumindest einen Formkörpers, der eine Form aufweist, die an die Außenfläche des Rohres angepasst ist,
C) Sintern des Formkörpers,
D) Anordnen von Elektroden auf dem Formkörper, und
E) Zusammensetzen und Befestigen des zumindest einen Formkörpers und des Rohrs.

Dabei wird im Verfahrensschritt B) der Formkörper unter Berücksichtigung der Schwindung des Formkörpers an die Außenfläche des Rohrs angepasst. Je nach Zusammensetzung des Materials für den Formkörper kann während des Sinterns im Verfahrensschritt C) eine Schwindung des Volumens des Formkörpers auftreten. Somit wird im Verfahrensschritt B) ein Formkörper spritzgegossen, der vor dem Sintern eine Form aufweist, die für das Rohr, an das der Formkörper angepasst wird, zu groß ist und nach dem Sintern an das Rohr angepasst ist.

Damit wird ein Verfahren bereitgestellt, in dem ein Formkörper an ein bereitgestelltes Rohr angepasst wird, indem er spritzgegossen wird, sodass eine große thermische Kontaktfläche zwischen Rohr und Formkörper gewährleistet ist. Die einzeln hergestellten und bereitgestellten Teile, das Rohr und der zumindest eine Formkörper, können mittels Klemmen oder Klebern aneinander befestigt werden.

Weiterhin wird im Verfahrensschritt B) für die Herstellung des Formkörpers ein keramisches Ausgangsmaterial bereitgestellt, das ein keramisches Füllmaterial der Struktur Ba_{1-x-y}MₓD_{y}Ti_{1-a-b}NₐMn_{b}O₃ und eine Matrix aufweist.

Um das keramische Ausgangsmaterial, mit weniger als 10 ppm metallischen Verunreinigungen herzustellen, kann es mit Werkzeugen hergestellt werden, die eine harte Beschichtung aufweisen, um einen Abrieb zu vermeiden. Eine harte Beschichtung kann beispielsweise aus Wolframcarbid bestehen. Alle Oberflächen der Werkzeuge, die mit dem keramischen Material in Berührung kommen, können mit der harten Beschichtung beschichtet sein.

Auf diese Weise kann ein keramisches Füllmaterial, das durch Sintern in ein keramisches PTC-Material überführt werden kann, mit einer Matrix vermischt und zu einem Granulat verarbeitet werden. Dieses Granulat kann zur Weiterverarbeitung zu dem Formkörper spritzgegossen werden.

Die Matrix, in die das keramische Füllmaterial eingelagert ist und die einen geringeren Schmelzpunkt aufweist, als das keramische Material, kann dabei einen Anteil von weniger als 20 Massen% gegenüber dem keramischen Material aufweisen. Die Matrix kann ein Material umfassen, das aus einer Gruppe ausgewählt ist, die Wachs, Harze, Thermoplaste und wasserlösliche Polymere umfasst. Weitere Zusätze, wie Antioxidantien oder Weichmacher können ebenfalls vorhanden sein.

Der Verfahrensschritt B) kann die Schritte
B1) Bereitstellen des keramischen Ausgangsmaterials,
B2) Spritzgiessen des Ausgangsmaterials in eine Form, und
B3) Entfernen der Matrix
aufweisen.

Während des Sinterns im Verfahrensschritt C) wird das keramische Ausgangsmaterial in das Material des Formkörpers, das einen positiven Temperaturkoeffizienten des elektrischen Widerstands aufweist, überführt.

Anhand der Figuren und Ausführungsbeispiele sollen die beschriebenen Gegenstände noch näher erläutert werden:
- Figur 1a: zeigt eine erste Ausführungsform der Heizungsvorrichtung in schematischer Seitenansicht,
- Figur 1b: zeigt die erste Ausführungsform der Heizungsvorrichtung in schematischer dreidimensionaler Ansicht,
- Figur 2a: zeigt eine zweite Ausführungsform der Heizungsvorrichtung in schematischer Seitenansicht,
- Figur 2b: zeigt die zweite Ausführungsform der Heizungsvorrichtung in schematischer dreidimensionaler Ansicht,
- Figur 3: zeigt eine dritte Ausführungsform der Heizungsvorrichtung in schematischer Seitenansicht.

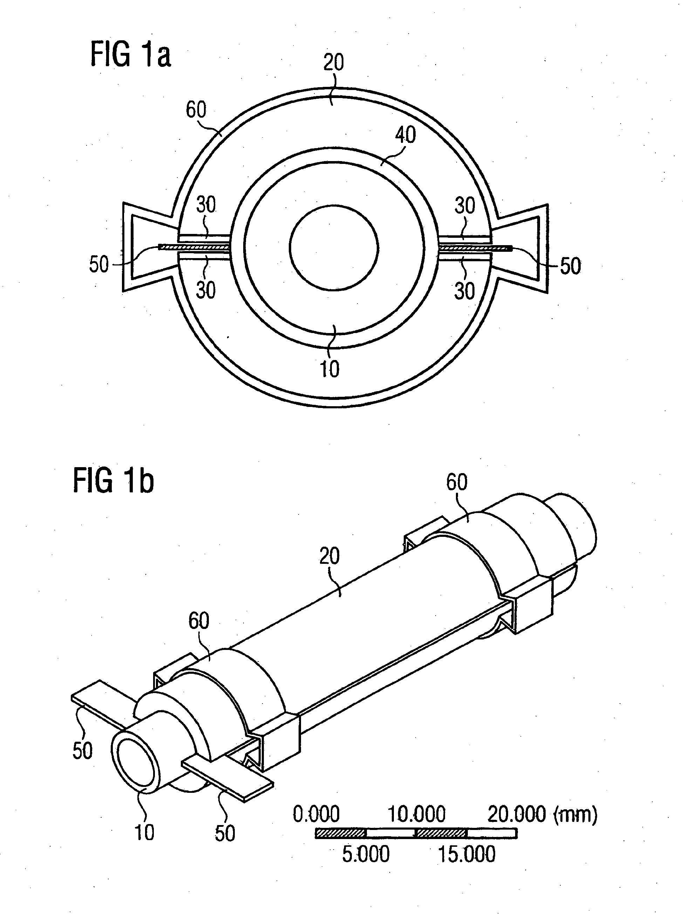

Figur 1a zeigt den schematischen Querschnitt der Seitenansicht einer ersten Ausführungsform der Heizungsvorrichtung. Das Rohr 10 ist von einer thermisch leitfähigen Paste 40 umgeben, auf der zwei Formkörper 20, die als Halbschalen ausgeformt sind, angeordnet sind. Das Rohr 10 weist eine zylindrische Form auf, an die die Formkörper 20 formschlüssig angepasst sind. Die thermisch leitfähige Paste 40 kann ein Polymer umfassen, in das thermisch leitfähige Partikel eingelagert sind. Das Rohr 10 kann aus einem thermisch leitfähigen Material bestehen, beispielsweise Aluminiumoxid. Die Formkörper 20 haben einen positiven Temperaturkoeffizienten des elektrischen Widerstands und enthalten ein Material mit der Struktur Ba_{1-x-y}MₓD_{y}Ti₁₋ₐ-_{b}NₐMn_{b}O₃.

An den Stirnseiten der Formkörper 20 sind Elektroden 30 vorhanden, die mittels Kontaktelementen 50 von außen elektrisch kontaktiert werden können. Die Formkörper 20 werden an dem Rohr 10 mittels einer Klemme 60 befestigt. Alternativ oder zusätzlich können die Formkörper 20 an dem Rohr 10 auch mit einem Kleber befestigt werden (hier nicht gezeigt). Innerhalb des Rohrs 10 kann ein Medium geleitet werden, das mittelbar durch den PTC-Effekt der Formkörper 20 bei Anlegen einer Spannung erhitzt werden kann. Der Heizvorgang beginnt, sobald durch die elektrische Kontaktierung ein Stromfluss in den Formkörpern 20 erzeugt wird.

Figur 1b zeigt eine dreidimensionale schematische Ansicht der Ausführungsform aus Figur 1a. Auch hier sind die Formkörper 20 zu sehen, sowie die Klemmen 60 und die elektrischen Kontaktelemente 50. Weiterhin sind freiliegende Bereiche des Rohres 10 vorhanden, die an ein Leitungssystem zur Leitung eines Mediums angeschlossen werden können.

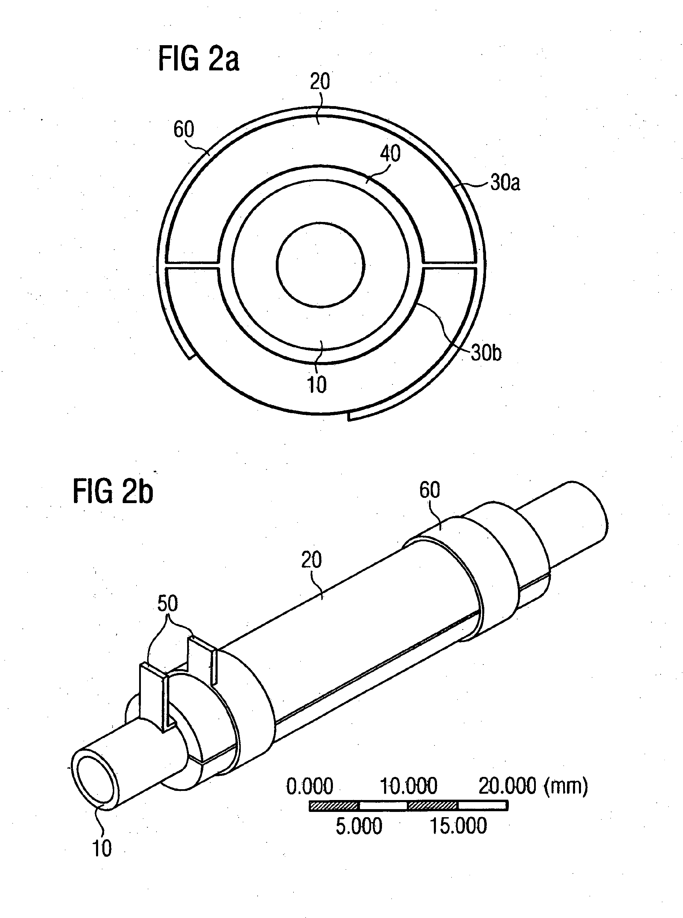

Figur 2a zeigt eine weitere schematische Seitenansicht einer Ausführungsform der Heizungsvorrichtung. Auf dem Rohr 10 ist wieder eine thermisch leitfähige Paste 40 angeordnet. Auf der Paste sind zwei halbschalenförmige Formkörper 20 vorhanden. Hier sind die Innen- und Außenflächen der Formkörper 20 metallisiert. Diese Metallisierungen stellen jeweils eine Elektrode 30 dar. Die Außenelektrode 30a, die Metallisierung auf der Außenfläche des Formkörpers, wird durch eine Aussparung der Klemme 60 von außen elektrisch kontaktiert. Die Innenelektrode 30b kann durch ein Kontaktelement, beispielsweise ein abgewinkeltes Kontaktblech von außen ebenfalls kontaktiert werden (hier nicht gezeigt).

Figur 2b zeigt die schematische Ansicht der Ausführungsform aus Figur 2a in dreidimensionaler Form. Hier sind die Kontaktelemente 50 zu sehen, die die Außen- und Innenelektrode 30a und 30b kontaktieren Die elektrische Kontaktierung erfolgt über die Stirnseite des Rohres.

Durch die unterschiedliche Anordnung der Elektroden 30 in den Figuren 1 und 2 ist die Richtung des Stromflusses in den Formkörpern unterschiedlich. Während in der Ausführungsform der Figur 1 der Stromfluss durch den Formkörper 20 parallel zu der Außenfläche des Rohrs 10 verläuft, verläuft der Stromfluss der Ausführungsform gemäß Figur 2 senkrecht zu der Außenfläche des Rohrs 10. In Simulationen kann gezeigt werden, dass besonders die Ausführungsform der Figur 1 eine hohe Heizleistung bei einer geringen Dicke des Formkörpers erreicht.

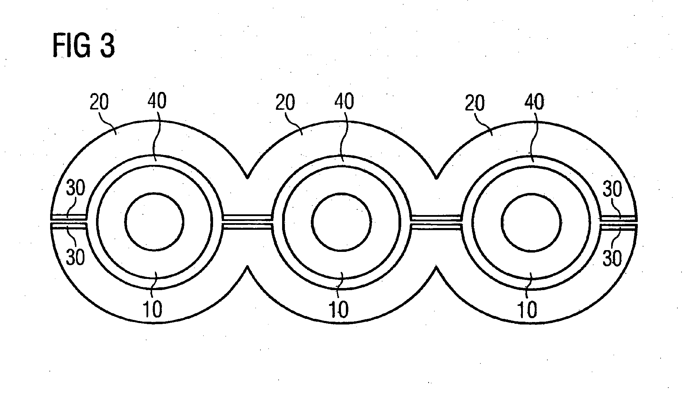

Figur 3 zeigt eine weitere schematische Seitenansicht einer Ausführungsform der Heizungsvorrichtung. Hier sind drei Rohre 10, die jeweils von einer thermisch leitfähigen Paste 40 umgeben sind, nebeneinander und parallel zueinander angeordnet. Zwei Formkörper 20, die an die parallel angeordneten Rohre 10 formschlüssig angepasst sind, sind auf zwei Seiten der Rohre angeordnet. Die Kontaktierung der Formkörper 20 kann analog dem Ausführungsbeispiel aus Figur 1 oder aus Figur 2 erfolgen. In Figur 3 sind beispielhaft Elektroden 30 an den Stirnseiten der Formkörper gezeigt. Kontaktelemente 50 zur elektrischen Kontaktierung der Formkörper, sowie Klemmen 60 zur Befestigung der Formkörper 20 an die Rohre 10 sind der Übersichtlichkeit halber in dieser Figur nicht gezeigt.

Die in den Figuren gezeigten Ausführungsformen können beliebig variiert werden. Es ist weiterhin zu berücksichtigen, dass sich die Erfindung nicht auf die Beispiele beschränkt, sondern weitere hier nicht aufgeführte Ausgestaltungen zulässt.

### Bezugszeichenliste

- 10: Rohr
- 20: Formkörper
- 30: Elektrode
- 30a: Außenelektrode
- 30b: Innenelektrode
- 40: Paste
- 50: Kontaktelement
- 60: Klemme

## Patentansprüche

1. Heizungsvorrichtung, umfassend
- ein Rohr (10) mit einer Außenfläche, das zur Leitung eines Mediums geeignet ist,
- zumindest einen spritzgegossenen Formkörper (20) auf der Außenfläche des Rohrs (10), wobei der Formkörper (20) ein Material mit positivem Temperaturkoeffizienten des elektrischen Widerstands und eine Curie-Temperatur, die in einen Bereich von -30°C bis 340°C fällt, aufweist, und an die Außenfläche des Rohrs (10) angepasst ist.

2. Heizungsvorrichtung nach dem vorhergehenden Anspruch, wobei die Außenfläche des Rohrs (10) zumindest in Teilbereichen eine Krümmung aufweist.

3. Heizungsvorrichtung nach einem der vorhergehenden Ansprüche, wobei das Rohr (10) ein thermisch gut leitfähiges Material aufweist.

4. Heizungsvorrichtung nach einem der vorhergehenden Ansprüche, wobei der zumindest eine Formkörper (20) und das Rohr (10) in thermischem Kontakt miteinander stehen.

5. Heizungsvorrichtung nach einem der vorhergehenden Ansprüche, wobei zwischen dem Rohr (10) und dem zumindest einen Formkörper (20) eine thermisch leitfähige Paste angeordnet ist.

6. Heizungsvorrichtung nach einem der vorherigen Ansprüche, wobei der zumindest eine Formkörper (20) eine Längsstreckung aufweist.

7. Heizungsvorrichtung nach einem der vorhergehenden Ansprüche, wobei der Formkörper (20) an dem Rohr (10) mittels einer Klemme (60) oder mittels eines Klebers befestigt ist.

8. Heizungsvorrichtung nach einem der vorhergehenden Ansprüche, wobei das Rohr (10) eine zylindrische Außenfläche aufweist, und der zumindest eine Formkörper (20) formschlüssig an die Außenfläche angepasst ist.

9. Heizungsvorrichtung nach einem der vorhergehenden Ansprüche, wobei entlang der Umfangsrichtung des Rohrs (10) mehrere Formkörper (20) auf dessen Außenfläche angeordnet sind.

10. Heizungsvorrichtung nach einem der vorhergehenden Ansprüche, wobei das Rohr (10) zur Leitung von Fluiden geeignet sind.

11. Heizungsvorrichtung nach einem der vorhergehenden Ansprüche, wobei der Formkörper (20) elektrische Kontaktierungen (50) zur Erzeugung eines Stromflusses aufweist.

12. Heizungsvorrichtung nach einem der vorhergehenden Ansprüche, wobei der zumindest eine Formkörper (20) ein keramisches Material enthält, das die Struktur Ba_{1-x-y}MₓD_{y}Ti_{1-a-b}NₐMn_{b}O₃ aufweist, wobei x = 0 bis 0,5, y = 0 bis 0,01, a = 0 bis 0,01, b = 0 bis 0,01, M ein zweiwertiges Kation umfasst, D einen drei- oder vierwertigen Donor umfasst und N ein fünf- oder sechswertiges Kation umfasst.

13. Heizungsvorrichtung nach einem der vorhergehenden Ansprüche, wobei der zumindest eine Formkörper (20) einen Widerstand bei 25°C aufweist, der in einem Bereich von 3 Ωcm bis 30000 Ωcm liegt.

14. Verfahren zur Herstellung einer Heizungsvorrichtung nach einem der Ansprüche 1 bis 13 mit den Verfahrensschritten
A) Bereitstellen eines Rohrs (10) mit einer Außenfläche,
B) Spritzgiessen eines zumindest eines Formkörpers (20), der eine Form aufweist, die an die Außenfläche des Rohrs (10) angepasst ist,
C) Sintern des Formkörpers (20),
D) Anordnen von Elektroden (30) auf dem Formkörper (20), und
E) Zusammensetzen und Befestigen des zumindest einen Formkörpers (20) und des Rohrs (10).

## Claims

1. Heating apparatus, comprising
- a pipe (10) having an outer surface, said pipe being suitable for conducting a medium,
- at least one injection-molded shaped body (20) on the outer surface of the pipe (10), wherein the shaped body (20) comprises a material with a positive temperature coefficient of electrical resistance and a Curie temperature which falls within a range of -30°C to 340°C, and is adapted to the outer surface of the pipe (10).

2. Heating apparatus according to the preceding claim, wherein the outer surface of the pipe (10) has a curvature at least in partial regions.

3. Heating apparatus according to either of the preceding claims, wherein the pipe (10) comprises a thermally highly conductive material.

4. Heating apparatus according to any of the preceding claims, wherein the at least one shaped body (20) and the pipe (10) are in thermal contact with one another.

5. Heating apparatus according to any of the preceding claims, wherein a thermally conductive paste is arranged between the pipe (10) and the at least one shaped body (20).

6. Heating apparatus according to any of the preceding claims, wherein the at least one shaped body (20) has a longitudinal extension.

7. Heating apparatus according to any of the preceding claims, wherein the shaped body (20) is fixed to the pipe (10) by means of a clamp (60) or by means of an adhesive.

8. Heating apparatus according to any of the preceding claims, wherein the pipe (10) has a cylindrical outer surface, and the at least one shaped body (20) is adapted to the outer surface in a positively locking manner.

9. Heating apparatus according to any of the preceding claims, wherein along the circumferential direction of the pipe (10), a plurality of shaped bodies (20) are arranged on the outer surface of said pipe.

10. Heating apparatus according to any of the preceding claims, wherein the pipe (10) is suitable for conducting fluids.

11. Heating apparatus according to any of the preceding claims, wherein the shaped body (20) has electrical contact-connections (50) for generating a current flow.

12. Heating apparatus according to any of the preceding claims, wherein the at least one shaped body (20) contains a ceramic material having the structure Ba_{1-x-y}MₓD_{y}Ti_{1-a-b}NₐMn_{b}O₃, where x = 0 to 0.5, y = 0 to 0.01, a = 0 to 0.01, b = 0 to 0.01, M comprises a divalent cation, D comprises a trivalent or tetravalent donor, and N comprises a pentavalent or hexavalent cation.

13. Heating apparatus according to any of the preceding claims, wherein the at least one shaped body (20) has a resistance at 25°C which lies in a range of 3 Ωcm to 30 000 Ωcm.

14. Method for producing a heating apparatus according to any of Claims 1 to 13, comprising the following method steps:
A) providing a pipe (10) having an outer surface,
B) injection-molding at least one shaped body (20) having a form adapted to the outer surface of the pipe (10),
C) sintering the shaped body (20),
D) arranging electrodes (30) on the shaped body (20), and
E) assembling and fixing the at least one shaped body (20) and the pipe (10).

## Revendications

1. Ensemble de chauffage comprenant :
un tube (10) doté d'une surface extérieure et convenant pour conduire un fluide,
au moins un corps (20) moulé par injection sur la surface extérieure du tube (10),
le corps moulé (20) présentant un matériau dont la résistance électrique présente un coefficient de température positif et une température de Curie située dans la plage de -30°C à 340°C et étant adapté à la surface extérieure du tube (10).

2. Ensemble de chauffage selon la revendication précédente, dans lequel au moins certaines parties de la surface extérieure du tube (10) présentent une courbure.

3. Ensemble de chauffage selon l'une des revendications précédentes, dans lequel le tube (10) présente un matériau bon conducteur de la chaleur.

4. Ensemble de chauffage selon l'une des revendications précédentes, dans lequel le ou les corps moulés (20) et le tube (10) sont en contact thermique mutuel.

5. Ensemble de chauffage selon l'une des revendications précédentes, dans lequel une pâte thermiquement conductrice est disposée entre le tube (10) et le ou les corps moulés (20).

6. Ensemble de chauffage selon l'une des revendications précédentes, dans lequel le ou les corps moulés (20) sont allongés.

7. Ensemble de chauffage selon l'une des revendications précédentes, dans lequel le corps moulé (20) est fixé sur le tube (10) au moyen d'une pince (60) ou au moyen d'un adhésif.

8. Ensemble de chauffage selon l'une des revendications précédentes, dans lequel le tube (10) présente une surface extérieure cylindrique et dans lequel le ou les corps moulés (20) sont adaptés en correspondance géométrique à la surface extérieure.

9. Ensemble de chauffage selon l'une des revendications précédentes, dans lequel plusieurs corps moulés (20) sont disposés à la périphérie de la surface extérieure du tube (10).

10. Ensemble de chauffage selon l'une des revendications précédentes, dans lequel le tube (10) convient pour conduire des fluides.

11. Ensemble de chauffage selon l'une des revendications précédentes, dans lequel le corps moulé (20) présente des contacts électriques (50) qui permettent de former un écoulement de courant.

12. Ensemble de chauffage selon l'une des revendications précédentes, dans lequel le ou les corps moulés (20) contiennent un matériau céramique qui présente la structure Ba_{1-x-y}MₓD_{y}Ti_{1-a-b}NₐMn_{b}O₃, avec x = 0 à 0,5, y = 0 à 0, 01, a = 0 à 0,01, b = 0 à 0,01, M étant un cation bivalent, D étant un donneur trivalent ou tétravalent et N étant un cation pentavalent ou hexavalent.

13. Ensemble de chauffage selon l'une des revendications précédentes, dans lequel le ou les corps moulés (20) présentent à 25°C une résistance comprise dans la plage de 3 Ω2cm à 30 000 Ω2cm.

14. Procédé de fabrication d'un ensemble de chauffage selon l'une des revendications 1 à 13, le procédé comportant les étapes qui consistent à :
A) préparer un tube (10) doté d'une surface extérieure,
B) mouler par injection au moins un corps moulé (20) dont la forme est adaptée à la surface extérieure du tube (10),
C) fritter le corps moulé (20),
D) disposer des électrodes (30) sur le corps moulé (20) et
E) assembler et fixer le ou les corps moulés (20) et le tube (10).
